# EUROPÄISCHE PATENTANMELDUNG

(11) **EP 0 551 250 A1**
(43) Veröffentlichungstag der Anmeldung: **14.07.1993**
(21) Anmeldenummer: 93890001.6
(22) Anmeldetag: 04.01.1993
(51) Int. Cl.: B61D 19/02, B61D 17/20

(54) **Aussentüre eines Waggons für den schienengebundenen Personenverkehr sowie Verfahren zum Öffnen und Schliessen derselben**

(30) Priorität: 08.01.1992 AT 17/92
(71) Anmelder: WIENER METALLWERK GMBH, A-2100 Korneuburg/Leobendorf (AT)
(72) Erfinder: Gemeinböck, Gerhard, Ing., A-1220 Wien (AT); Niewiadomski, Jan, Dipl.-Ing., A-1050 Wien (AT); Diepen, Peter, Dr., W-3062 Bückeburg (DE); Schneider, Fritz, Ing., W-4950 Minden (DE)
(74) Vertreter: Widtmann, Georg, Dipl.-Ing. Dr. techn.

(57) **Zusammenfassung**

Außentüre, insbesondere Übergangstüre an der Stirnwand, eines Waggons für den schienengebundenen Personenverkehr, wobei an die Außentüre, vorzugsweise an die Schiebetüre (1), in ihrer Geschlossenstellung eine im feststehenden Türrahmen od. dgl. angeordnete und durch ein unter Druck stehendes Medium, z. B. Druckluft, eine volums- und/oder formveränderliche Dichtung (D) mit gummielastischem Material und Hohlraum anlegbar ist, wobei der Hohlraum mit dem unter Druck stehenden Medium über zumindest einen öffen- und schließbaren Einlaß (A) beaufschlagbar ist, und der Hohlraum vom Druck des Mediums über einen öffen- und schließbaren Auslaß (A) in Geschlossenstellung der Außentüre entlastbar ist, wobei zumindest ein erst mit dem Öffnungsvorgang der Außentüre zum anschließenden Durchtritt von Personen öffenbarer Auslaß (V₂) für das unter Druck stehende Medium und erst mit dem Schließvorgang der Außentüre öffenbarer Einlaß (V₂) für das unter Druck stehende Medium in den Hohlraum der Dichtung betätigbar ist.

## Beschreibung

Die Erfindung bezieht sich auf eine Außentüre, insbesondere Übergangstüre an der Stirnwand, eines Waggons für den schienengebundenen Personenverkehr sowie ein Verfahren zum Öffnen und Schließen derselben.

An Außentüren von Eisenbahnwaggons od. dgl. wird auf Grund der immer höheren Reisegeschwindigkeiten steigende Ansprüche gestellt. Neben der erhöhten Sicherheit, d. h. daß die Türen, die unmittellbar in das Freie führen, entweder nicht während der Fahrt geöffnet werden können oder einen aufwendigeren Öffnungsmechanismus aufweisen, um ein unbeabsichtigtes Öffnen zu vermeiden, sind diese immer höheren Drucken ausgesetzt. Derartige Türen sind in der Regel Schwenktüren oder auch Schwenkschiebetüren, wobei eine Abdichtung derselben gegenüber dem Türrahmen oder dem Waggon grundsätzlich einfach durchgeführt werden kann. Hiefür müssen in der Regel lediglich Dichtungen aus gummielastischem Material vorgesehen sein, die beim Schließen einer geringfügigen Deformation unterliegen.

Eine weitere Art von Türen besteht in jenen, die im Stirnbereich eines Waggons angeordnet sind und den Durchtritt von Personen von einem Waggon in den weiteren gestatten sollen. Bevorzugt bei derartigen Türen sind doppelte Schiebetüren, da der Platzbedarf im von Personen benutzten Raum relativ gering ist und gleichzeitig das Öffnen und Schließen über einfache Druckluftzylinder/Kolbenaggregate verwirklicht werden können. Beim ersten Waggon weist die zur Lokomotive weisenden Türe und beim letzten Waggon die am Ende befindliche Türe hohe Druckbeanspruchungen auf. Diese Türen werden einerseits mechanisch verschlossen und anderseits werden sie in diesem geschlossenen Zustand durch eine Dichtung abgedichtet. Diese Dichtung weist einen Hohlraum auf, welcher mit Druckluft beaufschlagt wird, wobei die Beaufschlagung über ein händisch zu betätigendes Ventil, beispielsweise in bekannter Weise mit einem Vierkant, um unbefugtes Hantieren zu erschweren, erfolgen kann. Im nicht druckbeaufschlagten Zustand bewirken diese Dichtungen zwar eine Abdichtung, jedoch ist diese nicht ausreichend, um beispielsweise der hohen Zugluftbeanspruchung Rechnung zu tragen, wie sie beispielsweise im Übergang eines Hochgeschwindigkeitszuges von einem Waggon zum anderen Waggon verursacht sein kann. Ein derartiger Übergang weist eine hohe Anzahl miteinander verbundener Teile auf, die um einen derartigen Durchgang und den anschließenden Waggonteil zugluftfrei zu halten, eine extreme Abdichtung aufweisen müssen, wobei jeweils beim Kuppeln der Waggons peinlichst auf Sauberkeit der Dichtflächen und Vermeidung von Scharten an denselben zu achten ist.

Die vorliegende Erfindung hat sich zum Ziel gesetzt, eine Außentüre zu schaffen, die ohne großen Aufwand bei Bedarf geöffnet und geschlossen werden kann, wobei im geschlossenen Zustand eine vollkommene Dichtigkeit gegenuber dem Waggon gewährleistet sein soll, die insbesondere auch als druckdichte Durchtrittstüre an den Stirnflächen von Waggons bei Übertritten eingesetzt werden kann.

Die erfindungsgemäße Außentüre, insbesondere Übergangstüre an der Stirnwand, eines Waggons für den schienengebundenen Personenverkehr, wobei an die Außentüre, vorzugsweise an die Schiebetüre, in ihrer Geschlossenstellung eine im feststehenden Türrahmen od. dgl. angeordnete, durch ein unter Druck stehendes Medium, z. B. Druckluft, eine volums- und/oder formveränderliche Dichtung mit gummielastischem Material und Hohlraum anlegbar ist, wobei der Hohlraum mit dem Druckmedium über zumindest einen öffen- und schließbaren Einlaß beaufschlagbar ist und der Hohlraum vom Druck des Mediums über einen öffen- und schließbaren Auslaß in Geschlossenstellung der Außentüre entlastbar ist, besteht im wesentlichen darin, daß zumindest ein erst mit dem Öffnungsvorgang der Außentüre zum anschließendem Durchtritt von Personen öffenbarer Auslaß für das unter Druck stehende Medium und erst mit dem Schließvorgang der Außentüre öffenbarer Einlaß für das unter Druck stehende Medium in den Hohlraum der Dichtung betätigbar ist. Durch die im Türrahmen u. a. feststehenden Teilen, die mit der Türe in Geschlossenstellung kooperieren, kann eine Abdichtung zwischen Türe und Waggon erreicht werden. Die Dichtung besteht aus einem Hohlprofil, das durch ein unter Druck stehendes Medium gegen die Türe gedrückt werden kann. Bei einstückiger Ausfuhrung der Dichtung kann diese umlaufend sowohl im Bodenbereich, an den beiden Seiten und im Deckenbereich an die Türe anschließen. Sind zwei Schiebetüren vorgesehen, so können diese über geeignete ineinandergreifende Profile druckdicht gegeneinander in Geschlossenstellung abgedichtet werden. Wird nun ein erst mit dem Öffnungsvorgang der Außentüre zum anschließenden Durchtritt von Personen ein Auslaß öffenbar, so ist in der gesamten Bereitschaftsstellung zum Öffnen der Türe ein druckdichter Abschluß des Waggons gewährleistet, wobei ein schnelles Schließen der Außentüre dann gewährleistet ist, wenn erst mit dem Schließvorgang der Außentüre der Einlaß für das unter Druck stehende Medium betätigbar ist. Eine derartig überraschend einfache Konstruktion benötigt nicht die zusätzliche Anordnung einer Dichtung, sondern es kann die Dichtung, wie sie zur stationären Druckertüchtigung, also bei dauergeschlossener Türe Verwendung findet, zum Einsatz kommen.

Ist der Auslaß für das unter Druck stehende Medium aus dem Hohlraum der Dichtung erst mit dem Schließvorgang der Außentüre schließbar, so ist gewährleistet, daß die Dichtung vollkommen druckentlastbar ist, wodurch ein Schleifen od. dgl. der Dichtung beim Schließvorgang vermieden werden kann.

Ist der Einlaß für das unter Druck stehende Medium in den Hohlraum der Dichtung erst in der Geschlossenstellung der Außentüre schließbar, so kann ein besonders rasches Öffnen und Schließen der Türe in unmittelbarer Folge stattfinden, wie es beispielsweise bei Besteigen des Zuges im Stationsbereich und anschließender Dislozierung der Personen besonders erwünscht ist.

Ist der Auslaß und/oder Einlaß für das unter Druck stehende Medium aus dem bzw. in den Hohlraum der Dichtung elektrisch gesteuert, so kann eine besonders genaue Zeitabfolge, beispielsweise durch elektrische Verzögerungsglieder erfolgen, wobei gleichzeitig auf bewährte elektrische Ventile od. dgl. zurückgegriffen werden kann.

Ist ein elektrischer Schalter für den Einlaß und/oder Auslaß über einen Handgriff zur Betätigung der Außentüre betätigbar, so erfolgt eine zwangsweise Steuerung der Druckentlastung bzw. Druckbeaufschlagung der Dichtung, wobei die Trägheit der Druckentlastung so gering sein kann, daß der mechanische Impuls zum Öffnen oder Schließen der Türe keine Friktionen zwischen Türe und Dichtung bedingt ist.

Ist ein elektrischer Schalter für den Einlaß und/oder Auslaß über eine Fotozelle, die auf durchgehenwollende Personen ansprechbar ist, betätigbar, so ist hier eine einfache und bewährte Steuerung gegeben, mit welcher auch die Öffen- und Schließbewegung der Türe steuerbar ist. Die Steuerung ist meist mit einem Integrator ausgestattet, um erst ab einer gewissen Impulshöhe das Öffnen zu ermöglichen und um ungewolltes Öffnen bzw. Schließen der Türen zu vermeiden.

Reicht in den Öffnungsweg der Außentüre ein Bedienungsorgan eines elektrischen Schalters, welcher bei der Schließbewegung der Außentüre, insbesondere in Stellung 5 % bis 25 % des Schließweges zurückgelegt, den Einlaß für das unter Druck stehende Medium in den Hohlraum der Dichtung öffnet, so ist eine besonders gute Anpassung zwischen Schließbewegung und Druckbeaufschlagung der Dichtung gewährleistet.

Weist eine an den Auslaß anschließende Leitung eine größere Strömungsquerschnittsfläche, insbesondere zumindest die doppelte Querschnittsfläche, auf als eine zum Einlaß führende Leitung, so können die Zeiten zur Öffnung der Türe besonders leicht mit jenen zum Schließen der Türe abgestimmt werden, so daß nur geringe Gesamtzeiten benötigt werden.

Ist in Strömungsrichtung des gasförmigen unter Druck stehenden Mediums gesehen, nach dem Auslaß ein Schalldämpfer angeordnet, so kann ein besonders leises Öffnen der Türe gewährleistet sein, ohne daß dadurch eine wesentliche Zeitverzögerung, wie sie beispielsweise durch lange Gasleitungen bedingt wäre, verursacht wird.

Weist die Dichtung zumindest zwei Auslässe, gegebenenfalls mit je einem Ventil, für das unter Druck stehende Medium auf, so kann eine besonders rasche und gleichmäßige Druckentlastung der Dichtung erreicht werden.Derselbe Effekt kann für die Druckbelastung dadurch erreicht werden, wenn die Dichtung zumindest zwei Einlässe, gegebenenfalls mit je einem Ventil, für das unter Druck stehende Medium aufweist.

Ist zumindest je ein Einlaß und/oder zumindest je ein Auslaß für das unter Druck stehende Medium in den Teilen der Dichtung vorgesehen, welche im wesentlichen vertikal angeordnet sind, so kann eine besonders schnelle Entlastung und Belastung mit dem unter Druck stehenden Medium in jenen Bereichen erreicht werden, die besonders anfällig für Zugluft und andere eindringende Medien besonders empfindlich sind. Wird der Auslaß und Einlaß für das unter Druck stehende Medium durch ein Dreiwegventil gebildet, so genügt nur ein Anschluß in den Hohlraum der Dichtung für je einen Einlaß und je einen Auslaß.

Ist die Schließ- und/oder Öffenvorrichtung, insbesondere das Dreiwegventil, für das unter Druck stehende Medium direkt mit einem fluiddichten Anschluß, der in den Hohlraum der Dichtung mündet, verbunden, so sind besonders kurze Strömungswege gewährleistet, welche die Trägheit des gesamten Systems besonders gering zu halten erlaubt.

Eine besonders einfache konstruktive Lösung liegt dann vor, wenn bei einem gasförmigen unter Druck stehenden Medium ein Zylinder mit, insbesondere doppelwirkenden, Kolben zum Öffnen und Schließen der Außentüre gleichzeitig mit dem Einlaß in den Hohlraum der Dichtung für das unter Druck stehende Medium beaufschlagbar ist. Ein derartiges System kann einerseits dadurch gesteuert werden, daß der Kolben als solches auf Grund seiner Masse eine gewisse Trägheit aufweist, wobei weiters durch die Länge der Leitungen ebenfalls eine zeitliche Steuerung bei der Betätigung möglich ist.

Werden zur Steuerung des Auslasses und Einlasses und/oder Zylinder mit Kolben induktiv ansprechbare Sensoren angeordnet, so kann eine besonders störungsfreie Steuerung verwirklichst werden, die sich herkömmlicher elektrisch betätigbarer Ventile bedienen kann.

Das erfindungsgemäße Verfahren zum Öffnen und Schließen von Außentüren, bei welchem die Außentüre in Geschlossenstellung mit einer Dichtung durch Einwirkung unter Druck stehenden Mediums in einem Hohlraum der Dichtung beaufschlagt wird und zum Öffnen der Außentüre der Hohlraum von dem unter Druck stehenden Medium entlastet wird, besteht im wesentlichen darin, daß die Beaufschlagung und Entlastung des Hohlraumes mit dem bzw. von dem unter Druck stehenden Medium über insbesondere elektrische Signale und/oder Impulse erfolgt und daß nach dem Signal und/oder Impuls an den Auslaß aus dem Hohlraum der Dichtung zum Öffnen ein Signal und/oder Impuls an einen Antrieb zum Öffnen der Außentüre erteilt wird. Durch ein derartiges Verfahren ist eine manuelle Steuerung für die Dichtung nicht mehr erforderlich, wobei es durchaus erstaunlich war, daß die Öffnungs- und Schließzeiten durch die Druckbe- und Druckentlastung so gering sind, daß der normale Durchtrittsverkehr von einem Waggon zum anderen keiner zeitlichen Verzögerung unterliegt.

Wir nach dem Signal und/oder Impuls zum Schließen der Außentüre ein Signal zum Öffnen des Einlasses für das unter Druck stehende Medium in den Hohlraum erteilt, so ist eine Verfahrensweise gegeben, die insbesondere bei kurz nacheinander anschließenden Öffnungs- und Schließvorgängen der Türe, wie sie bei einer hohen Frequenz von durchtretenden Personen auftritt, für ein besonders rasches Öffnen und Schließen Sorge tragen kann. Um ein besonders rasches Öffnen der Außentüre zu gewährleisten, kann auch das unter Druck stehende Medium aus dem Hohlraum abgesaugt werden.

Im folgenden wird die Erfindung anhand der Zeichnungen näher erläutert.

Es zeigen:
Fig. 1 eine Schiebetüre in der Stirnwand eines Waggons,
Fig. 2 einen Schnitt durch den Türrahmen und einen Teil der Türe,
Fig. 3 ein Blockschaltbild der pneumatischen Steuerung und
Fig. 4 die zu Fig. 3 zugehörige elektrische Schaltung.

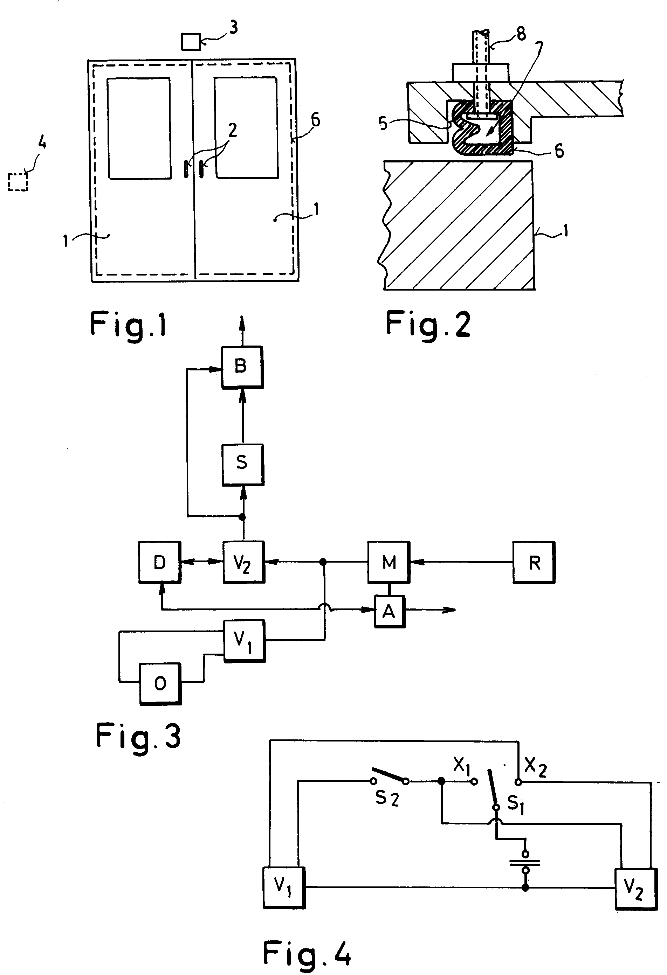

Die in Fig. 1 dargestellte Schiebetüre weist zwei Türblätter 1 auf, die entweder über die Handgriffe 2 oder über die Fotozelle 3, die oberhalb der Türblätter 1 angeordnet ist, geöffnet werden. Die Öffen- und Schließbewegung wird durch einen doppelwirkenden pneumatischen Zylinder durchgeführt, wobei die jeweilige Umsteuerung durch elektrische Impulse erfolgt, die ein Relais öffnen und schließen und so die Ventile betätigen. Ist die Schiebeture zu 90 % geöffnet, so wird der induktiv betätigbare Schalter 4 beaufschlagt, welcher sodann ein Relais schließt, über das die Druckluftzufuhr zum Schließ- und Öffenzylinder unterbrochen wird.

Wie besonders deutlich den Fig. 1 und 2 zu entnehmen, ist in einer umlaufenden Nut 5 eine Dichtung 6 angeordnet, die einen Hohlraum 7 aufweist, in welchem über die Tülle 8 ein unter Druck stehendes Medium, u. zw. Druckluft, eingeleitet werden kann. Durch diese Druckluft wird die Dichtung entfaltet, also aufgeblasen und gegen das Türblatt 1 gedrückt. Als Material für die Dichtung sind gummielastische Werkstoffe, wie beispielsweise Gummi, Polyurethan u. dgl., geeignet. Wie aus Fig. 1 ersichtlich, ist die Dichtung an den beiden Seitenbereichen und querverlaufend sowie oben im Deckenbereich als auch unten im Bodenbereich umlaufend angeordnet. Die Dichtung ist eine endlose Dichtung und weist jeweils in den beiden Seitenbereichen einen in Fig. 1 nicht dargestellten Ein- und Auslaß, deren konstruktive Lösung in Fig. 2 dargestellt ist, auf.

Bei dem in Fig. 3 dargestellten Blockschaltbild gelangt die Druckluft vom Reservoir R in den Druckminderer M und wird dort auf 0,8 bar Überdruck reduziert. Die Druckluft kann sodann über den manuell öffen- und schließbaren Auslaß A in die Dichtung D gelangen. Der Auslaß A dient zur andauernden Druckbelastung der Schiebetüre, wenn die Türe nicht geöffnet werden soll, also im ersten bzw. im letzten Waggon, wo kein Übergang zu einem anderen Waggon erforderlich ist. Die Abdichtung der Schiebetüren zueinander erfolgt durch ineinandergreifende elastisch deformierbare Dichtungen, so daß eine vollständige Dichtheit der Türen im geschlossenen Zustand gewährleistet ist. Vom Druckminderer M zweigt eine Leitung zum Mehrwegventil V₁ und eine weitere Leitung zum Mehrwegventil V₂ ab. Durch das Mehrwegventil V₁ kann je nach Stellung entweder die Druckluftzufuhr zum Öffen- und Schließzylinder O entweder vollkommen unterbrochen werden, wie dies bei Öffenstellung der Türe erwünscht werden soll, oder beim Befehl "Öffnen der Türe" eine Seite des Kolbens beaufschlagt werden und beim Befehl "Schließen der Türe" die andere Seite des Kolbens beaufschlagt werden, so daß jeweils eine Öffen- bzw. Schließbewegung der Türe verwirklicht wird. Das Mehrwegventil V₂ verbindet den Hohlraum der Dichtung D entweder mit dem Druckminderer M oder mit dem Schalldämpfer S. Die Dichtung kann sodann auch über eine eigene Leitung mit der Absaugung B verbunden sein, wobei die Absaugung auch über den Schalldämpfer erfolgen kann. Über das Mehrwegeventil V₂ wird somit je nach Stellung der Schiebetüre entweder die Dichtung mit der Druckluft beaufschlagt oder von der Druckluft entlastet. Gegebenenfalls erfolgt ein Absaugen der Druckluft aus dem Hohlraum der Dichtung, beispielsweise mit einem Unterdruck von 0,3 bar.

Wie in Fig. 4 dargestellt, weist der Schalter S₁, der beispielsweise im Handgriff 2 der Türblätter 1 angeordnet sein kann, oder auch ein fotoelektrischer Schalter zwei Stellungen X₁ und X₂ auf. In Stellung X₁ wird das Mehrwegeventil V₂ geöffnet, so daß die Druckluft aus dem Hohlraum der Dichtung D entweichen kann. Gleichzeitig wird das Mehrwegeventil V₁ so betätigt, daß der Öffen- und Schließzylinder O mit Druckluft zum Öffnen der Schiebetüre beaufschlagt wird. Über den Schalter S₂ kann auch eine zusätzliche Steuerung des Mehrwegeventiles V₁ bei Stellung X₁ des Schalters S₁ erreicht werden. In der Stellung X₂ des Schalters S₁ wird das Mehrwegeventil V₁ in jene Stellung gebracht, daß die Druckluft die Schließbewegung des Zylinders bewirkt, wohingegen das Mehrwegeventil V₂ die Verbindung der Dichtung zwischen Schalldämpfer S bzw. Absaugung B unterbricht und die Druckluft vom Druckminderer M in den Hohlraum der Dichtung D leitet. Die Zuleitung für die Druckluft weist einen Durchmesser von 4 mm auf, wohingegen die Ableitung für die Druckluft einen Durchmesser von 8 mm aufweist. Damit wird ein schnelles Ausströmen der Luft aus dem Hohlraum der Dichtung möglich. Um eine Koordinierung der Druckbelastung bzw. -entlastung der Dichtung und der Öffen- und Schließbewegung der Schiebetüre zu ermöglichen und damit möglichst geringe Öffen- und Schließzeiten zu bedingen, wird beim Öffnen der Schiebetüre wie folgt vorgegangen.

Es wird zuerst der Hohlraum der Dichtung druckentlastet, wonach erst die Bewegung des Öffen- und Schließzylinders erfolgt. Da der Kolben im Zylinder eine relativ große Masse aufweisen muß, um weiters die Türen ebenfalls eine große Masse aufweisen, genügt alleine die Verzögerung durch die Trägheit der Massen, daß mit geeigneter Wahl der Dichtung keine Friktion auf Grund noch druckbelasteter Dichtung eintritt.

Beim Schließen der Türe wird nun so vorgegangen, daß zuerst der Zylinder zum Schließen mit Druckluft beaufschlagt wird, wonach beispielsweise in der Stellung "90 % geöffnet", ein Schalter betätigt wird, so daß sodann die Druckluft in den Hohlraum der Dichtung gelangt.

Anstelle von Schiebetüren können auch Schwenktüren oder Schwenkschiebetüren Verwendung finden. Jedenfalls sind derartige Außentüren bestens geeignet, um auch den Übergang von einem Waggon zum anderen bei geschlossenen Türen druckdicht zu gestalten, so daß keine großen konstruktiven Aufwendungen betrieben werden müssen, um die Druckdichtigkeit des Überganges als solchen zu gewährleisten.

Obwohl in der Beschreibung die Ein- und Auslässe mit den Ventilen gleichgesetzt sind, ist nur die Beaufschlagung des direkten Ein- und Auslasses, z. B. in den Hohlraum der Dichtung, mit dem Druckmedium wesentlich. Es sind auch getrennte Ein- und Auslässe bei bestimmten konstruktiven Lösungen von Vorteil.

Anstelle von gasförmigem unter Druck stehendem Medium kann auch beispielsweise Hydraulikflüssigkeit verwendet werden.

Der Aufwand mit Hydraulik wird dann gerechtfertigt sein, wenn besonders exakte Steuerungen erwünscht sind.

## Patentansprüche

1. Außentüre, insbesondere Ubergangstüre an der Stirnwand, eines Waggons für den schienengebundenen Personenverkehr, wobei an die Außentüre, vorzugsweise an die Schiebetüre (1), in ihrer Geschlossenstellung eine im feststehenden Türrahmen od. dgl. angeordnete und durch ein unter Druck stehendes Medium, z. B. Druckluft, eine volums- und/oder formveränderliche Dichtung (6, D) mit gummielastischem Material und Hohlraum (7) anlegbar ist, wobei der Hohlraum (7) mit dem unter Druck stehenden Medium über zumindest einen öffen- und schließbaren Einlaß (A) beaufschlagbar ist, und der Hohlraum (7) von Druck des Mediums über einen öffen- und schließbaren Auslaß (A) in Geschlossenstellung der Außentüre entlastbar ist, dadurch gekennzeichnet, daß zumindest ein erst mit den Öffnungsvorgang der Außentüre zum anschließenden Durchtritt von Personen öffenbarer Auslaß (V₂) für das unter Druck stehende Medium und erst mit dem Schließvorgang der Außentüre öffenbarer Einlaß (V₂) für das unter Druck stehende Medium in den Hohlraum (7) der Dichtung (6) betätigbar ist.

2. Außentüre nach Anspruch 1, dadurch gekennzeichnet, daß der Auslaß (V₂) für das unter Druck stehende Medium aus dem Hohlraum (7) der Dichtung (6) erst mit dem Schließvorgang der Außentüre schließbar ist.

3. Außentüre nach Anspruch 1 oder 2, dadurch gekennzeichnet, daß der Einlaß (V₂) für das unter Druck stehende Medium in den Hohlraum (7) der Dichtung (6) erst in der Geschlossenstellung der Außentüre schließbar ist.

4. Außentüre nach Anspruch 1, 2 oder 3, dadurch gekennzeichnet, daß der Auslaß und/oder Einlaß (V₂) für das unter Druck stehende Medium aus den bzw. in den Hohlraum (7) der Dichtung (6) elektrisch steuerbar ist.

5. Außentüre nach einem der Ansprüche 1 bis 4, dadurch gekennzeichnet, daß ein elektrischer Schalter (S₁) für den Einlaß und/oder Auslaß (V₂) über einem Handgriff (2) zur Betätigung der Außentüre betätigbar ist.

6. Außentüre nach einem der Ansprüche 1 bis 5, dadurch gekennzeichnet, daß ein elektrischer Schalter (S₁) für den Einlaß und/oder Auslaß (V₂) über eine Fotozelle (3), die auf durchgehenwollende Personen ansprechbar ist, betätigbar ist.

7. Außentüre nach einem der Ansprüche 1 bis 6, dadurch gekennzeichnet, daß in den Öffnungsweg der Außentüre ein Bedienungsorgan eines elektrischen Schalters (4, S₂) ragt, welcher bei der Schließbewegung der Außentüre, insbesondere in Stellung 5 % bis 25 % des Schließweges zurückgelegt, den Einlaß für das unter Druck stehende Medium in den Hohlraum (7) der Dichtung (6) öffnet.

8. Außentüre nach einem der Ansprüche 1 bis 7, dadurch gekennzeichnet, daß eine an den Auslaß (V₂) anschließende Leitung eine größere Querschnittsfläche, insbesondere zumindest die doppelte Querschnittsfläche aufweist, als eine zum Einlaß (V₂) führende Leitung.

9. Außentüre nach einem der Ansprüche 1 bis , dadurch gekennzeichnet, daß in Strömungsrichtung des gasförmigen unter Druck stehenden Mediums gesehen, nach dem Auslaß (V₂) ein Schalldämpfer (S) angeordnet ist.

10. Außentüre nach einem der Ansprüche 1 bis 9, dadurch gekennzeichnet, daß die Dichtung (6) zumindest zwei Auslässe, gegebenenfalls mit je einem Ventil, für das unter Druck stehende Medium aufweist.

11. Außentüre nach einem der Ansprüche 1 bis 10, dadurch gekennzeichnet, daß die Dichtung (6) zumindest zwei Einlässe, gegebenenfalls mit je einem Ventil, für das unter Druck stehende Medium aufweist.

12. Außentüre nach einem der Ansprüche 1 bis 11, dadurch gekennzeichnet, daß zumindest je ein Einlaß und/oder zumindest je ein Auslaß für das unter Druck stehende Medium in den Teilen der Dichtung (6) vorgesehen ist, welche in wesentlichen vertikal angeordnet sind.

13. Außentüre nach einem der Ansprüche 1 bis 12, dadurch gekennzeichnet, daß der Auslaß und Einlaß für das unter Druck stehende Medium durch ein Dreiwegventil (V₂) gebildet ist.

14. Außentüre nach einem der Ansprüche 1 bis 13, dadurch gekennzeichnet, daß die Schließ- und/oder Öffenvorrichtung, insbesondere das Dreiwegventil (V₂), für das unter Druck stehende Medium direkt mit einem fluiddichten Anschluß (8), der in den Hohlraum (7) der Dichtung (6) mündet, verbunden ist.

15. Außentüre nach einem der Ansprüche 1 bis 14, dadurch gekennzeichnet, daß bei einem gasförmigen unter Druck stehenden Medium ein Zylinder mit, insbesondere doppelwirkenden, Kolben zum Öffnen und Schließen der Außentüre gleichzeitig mit dem Einlaß in den Hohlraum (7) der Dichtung (6) für das unter Druck stehende Medium beaufschlagbar ist.

16. Außentüre nach einem der Ansprüche 1 bis 15, dadurch gekennzeichnet, daß induktiv ansprechbare Sensoren zur Steuerung des Einlasses und/oder Auslasses und/oder Zylinder mit Kolben angeordnet sind.

17. Verfahren zum Öffnen und Schließen von Außentüren, insbesondere nach einem der Ansprüche 1 bis 16, bei welchem die Außentüre in Geschlossenstellung mit einer Dichtung durch Einwirkung eines unter Druck stehenden Mediums in einem Hohlraum der Dichtung, beaufschlagt wird und zum Öffnen der Außentüre der Hohlraum von dem unter Druck stehenden Medium entlastet wird, dadurch gekennzeichnet, daß die Beaufschlagung und Entlastung des Hohlraumes mit den bzw. von dem unter Druck stehenden Medium über, insbesondere elektrische, Signale und/oder Impulse erfolgt und daß nach dem Signal und/oder Impuls an den Auslaß aus dem Hohlraum der Dichtung zum Öffnen ein Signal und/oder Impuls an einen Antrieb zum Öffnen der Außentüre erteilt wird.

18. Verfahren nach Anspruch 17, dadurch gekennzeichnet, daß nach dem Signal und/oder Impuls zum Schließen der Außentüre ein Signal zum Öffnen des Einlasses für das unter Druck stehende Medium in den Hohlraum erteilt wird.

19. Verfahren nach Anspruch 16 oder 17, dadurch gekennzeichnet, daß zum Öffnen der Außentüre das unter Druck stehende Medium aus dem Hohlraum abgesaugt wird.
